# EUROPÄISCHE PATENTSCHRIFT

(11) **EP 1 316 669 B1**
(45) Veröffentlichungstag und Bekanntmachung des Hinweises auf die Patenterteilung: **19.03.2008**
(21) Anmeldenummer: 03005199.9
(22) Anmeldetag: 25.11.1998
(51) Int. Cl.: E21B 10/44

(54) **Gesteinbohrwerkzeug**
Rock drilling tool
Outil de forage pour roche

(30) Priorität: 04.12.1997 DE 19753731
(43) Veröffentlichungstag der Anmeldung: 04.06.2003
(62) Teilanmeldung aus: 01119583.1
(73) Patentinhaber: ROBERT BOSCH GMBH, 70442 Stuttgart (DE)
(72) Erfinder: Fuss, Mathias, 70771 Leinfelden-Echterdingen (DE); Wagegg, Thomas, 3924 St. Niklaus/Wallis (CH); Moser, Bernhard, 88361 Althausen (DE)
(74) Vertreter: Eisele, Otten, Roth & Dobler

(56) Entgegenhaltungen:
- DE-B1- 2 358 447
- DE-C- 803 291

## Beschreibung

Die Erfindung betrifft ein Bohrwerkzeug insbesondere ein Gesteinsbohrwerkzeug nach dem Oberbegriff des Anspruchs 1.

### Stand der Technik:

Gesteinsbohrer bestehen aus einem, meist mit einer Hartmetall-Schneidplatte versehenen Bohrerkopf, einer sich hieran anschließenden ein- oder mehrgängigen spiralförmigen Förderwendel sowie einem nachfolgenden Einspannschaft zur Befestigung in einer Antriebsmaschine. Die Förderwendel hat bei Gesteinsbohrern die Hauptaufgabe, das durch die Hartmetallschneide gelöste Material, d. h. das Bohrmehl oder Bohrklein, aus dem Bohrloch herauszufördern. Dabei spielt die Größe der Bohrmehlnut, d. h. der freie Förderquerschnitt, für die Leistungsfähigkeit des Bohrers eine entscheidende Rolle, d. h. ein guter Bohrmehltransport gewährleistet einen guten Vorschub und verhindert Rattermarken im Bohrloch sowie eine Beschädigung des Bohrers durch Verklemmen, Überhitzen oder dergleichen. Auch die Standzeiten eines Bohrwerkzeugs werden durch die guten Fördereigenschaften der Bohrmehlnut beeinflußt.

Die Förderwendel hat darüber hinaus auch Führungseigenschaften des Bohrwerkzeugs im Bohrloch zu erfüllen.

Die wendelförmige Abfuhrnut für Bohrmehl einer ein- oder mehrgängigen Förderwendel wird beidseitig von ebenfalls wendelförmig verlaufenden Stegen begrenzt. Dabei wird eine in Transportrichtung des Bohrmehls, d. h. in Richtung Einspannschaft, weisende Tragfläche oder Transportfläche für das Bohrmehl durch die Stege gebildet. Die Umfangsfläche oder Mantelfläche eines Stegs bildet die sogenannte Rückenfläche mit einer bestimmten Rückenbreite des Stegs. Je breiter diese Rückenfläche ausgeführt ist, um so besser sind die Führungseigenschaften des Bohrwerkzeugs im Bohrloch. Nachteilig hieran ist jedoch die vergrößerte Reibung im Bohrloch und das verkleinerte Nutenvolumen zum Abtransport des Bohrmehls. Es müssen demnach Kompromisse zwischen Breite der Rückenfläche der Stege und des daraus resultierenden Nutenvolumens einerseits und den geforderten Führungseigenschaften andererseits getroffen werden.

Aus der DE-AS 20 13 328 ist der prinzipielle Aufbau einer solchen zweigängigen Förderwendel in den dortigen Figuren dargestellt.

Es gibt eine Reihe von Vorschlägen, die Fördereigenschaften des Bohrmehls in den Bohrmehlnuten zu verbessern. Beispielsweise ist gemäß der EP 0 126 409 B2 vorgesehen, die Steigungshöhe der Förderwendel in Richtung Einspannende zu vergrößern, um so im Bereich des Bohrerkopfes eine erhöhte Anzahl von Stegflächen zur Verbesserung der Führungseigenschaften zur Verfügung zu stellen. Hierdurch vergrößert sich auch die Bohrmehlnut in Richtung Einspannende, d. h. in Förderrichtung des Bohrmehls, so daß es nicht zu einem Verklemmen des Bohrers kommen kann.

In der DE 30 14 693 C2 ist ausgeführt, daß gute Fördereigenschaften einer Förderwendel nach dem Prinzip einer Förderschnecke nur dann vorliegen, wenn zwischen dem in der Abfuhrnut befindlichen Bohrklein und der Wandung des Bohrlochs ein größerer Reibungswiderstand als zwischen dem Bohrklein und der Oberfläche der Abfuhrnut besteht. Hierfür sei es erforderlich, daß das Nutenvolumen der Bohrmehlnut stets an die anfallende Menge an Bohrmehl angepaßt ist, um diese Reibungsverhältnisse zu schaffen. Dies ist jedoch aufgrund der unterschiedlich anfallenden Menge an Bohrmehl aufgrund unterschiedlicher Bohrbedingungen nicht möglich. Dieser Stand der Technik schlägt deshalb vor, die Bohrmehlnut abschnittsweise in Richtung Einspannende zu vergrößern.

Aus der DE 43 38 667 A1 ist ein Gesteinsbohrer bekannt geworden, bei welchem eine Verminderung der Wandreibung dadurch erzeugt wird, daß die Rückenflächen der spiralförmigen Stege darin eingebrachte Nuten aufweisen. Diese Nebennuten bewirken in erster Linie eine Reduzierung der Fläche der Rückenstege und vermindern damit die Reibung. In gewissem Umfang können sie auch zur Abfuhr von Bohrgut dienen, was jedoch lediglich ein Nebeneffekt darstellt.

Die FR-A-1.595.690 beschreibt ein Bohrwerkzeug mit einem Bohrerkopf, einer sich hieran anschließenden, spiralförmigen Förderwendel mit wenigstens einer Abfuhrnut für Bohrmehl und einem Einspannschaft, wobei die Abfuhrnut der Förderwendel von spiralförmig verlaufenden Hauptstegen mit gleichem Außendurchmesser begrenzt ist.

Die DE 803 291 beschreibt ein Bohrwerkzeug mit einem Bohrerkopf, einer sich hieran anschließenden, spiralförmigen Förderwendel mit wenigstens einer Abfuhrnut für Bohrmehl und einem Einspannschaft, wobei die Abfuhrnut der Förderwendel von spiralförmig verlaufenden Hauptstegen mit gleichem Außendurchmesser begrenzt ist und wobei zwischen den Hauptstegen Nebenstege liegen. Die Nebenstege weisen bedingt durch ihre Größe und ihre Form quasi keine Fördereigenschaften auf und entstehen als Nebenprodukt einer rombischen Querschnittsfläche der Bohrstange, durch welche der Verlauf der Flanken der Schneckenrippen bestimmt wird.

Der Erfindung liegt die Aufgabe zugrunde, ein Bohrwerkzeug zu schaffen, welches gegenüber herkömmlichen Bohrwerkzeugen verbesserte Fördereigenschaften für das Bohrgut aufweist, bei einer Verminderung der Wandreibung. Dabei sollen möglichst einfache und damit kostengünstige konstruktive Maßnahmen den gewünschten Erfolg herbeiführen.

Diese Aufgabe wird ausgehend von einem Bohrwerkzeug nach dem Oberbegriff des Anspruchs 1 durch die kennzeichnenden Merkmale des Anspruchs 1 gelöst.

In den Unteransprüchen sind vorteilhafte und zweckmäßige Weiterbildungen des Gesteinsbohrwerkzeugs nach Anspruch 1 angegeben.

Der Erfindung liegt die Erkenntnis zugrunde, daß gute Fördereigenschaften des Bohrmehls in Bohrmehlnuten nicht zuletzt auch durch die Größe der zur Verfügung stehenden Bohrmehl-Tragflächen bestimmt wird. Diese Größe wird durch die Anzahl der vorhandenen Abfuhrnuten mit jeweils einer vorhandenen Tragfläche bestimmt. Die erfindungsgemäße Ausbildung des Bohrwerkzeugs sieht vor, daß außer den üblicherweise vorgesehenen Hauptstegen mit entsprechenden Tragflächen, Förderkanten oder Förderflanken zusätzlich sogenannte Nebenstege vorgesehen sind, die ihrerseits zusätzliche Bohrmehltragflächen bilden. Erfindungsgemäß weisen die Nebenstege einen äußeren Durchmesser auf, der etwa 70 bis 95 % des Außendurchmessers der Hauptstege beträgt.

Durch erfindungsgemäße Maßnahmen kann die Abfuhrnut als sogenannte Doppelnut oder Mehrfachnut gebildet werden, so daß vorzugsweise innerhalb einer Abfuhrnut mehrere Einzelnuten mit zugehörigen Tragflächen für Bohrmehl vorhanden sind.

Ausgehend von dieser Grunderkenntnis ergeben sich eine Vielzahl von Gestaltungsmöglichkeiten zur Verwirklichung dieser Grundidee. Diese Gestaltungsmöglichkeiten beinhalten eine Variation der Art der Anordnung der Nebentragflächen in Form von Nebenförderkanten. Variiert werden kann auch die Anzahl solcher Nebenförderelemente, wodurch nicht zuletzt auch die Aufteilung der Abfuhrnut in gleich große oder unterschiedlich große Teil-Abfuhrnuten erfolgt, mit gleich großen oder unterschiedlich großen Nutentiefen.

Verschiedene Ausführungsbeispiele des erfindungsgemäßen Grundgedankens sind in der Zeichnung dargestellt und in der nachfolgenden Beschreibung näher erläutert.

Es zeigen
- Fig. 1: ein erfindungsgemäßes Bohrwerkzeug in Gesamtdarstellung,
- Fig. 2-11: verschiedene Ausführungsvarianten des Bohrwerkzeugs nach Fig. 1,
- Fig. 12, 13: eine nicht zur Erfindung zugehörige Ausführungsform.

### Beschreibung der Ausführungsbeispiele:

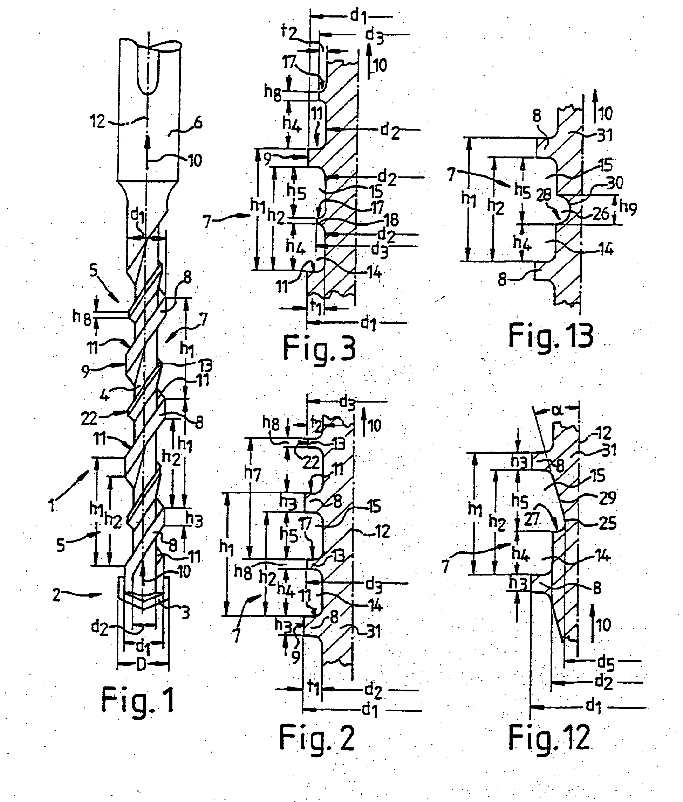

Das in Fig. 1 dargestellte Bohrwerkzeug beschreibt das Grundprinzip der Erfindung. Hier wird das Prinzip der Bildung von Haupt- und Nebenförderwendeln dadurch bewirkt, daß innerhalb einer bestehenden Abfuhrnut 7 einzelne Abfuhrnut-Abschnitte gebildet werden, die für sich gesehen zusätzliche Bohrmehltragflächen bilden. Eine Variante dieses Grundprinzips ist in den Fig. 2 bis 13 jeweils dargestellt.

Das in Fig. 1 dargestellte Gesteinsbohrwerkzeug 1 besteht aus einem Bohrerkopf 2, vorzugsweise mit stirnseitig vorgesehener Hartmetall-Schneidplatte 3, einem Wendelschaft 4 mit spiralförmiger Förderwendel 5 und einem sich anschließenden Einspannschaft 6 zum Einsetzen in eine Antriebsmaschine.

Beim Bohrwerkzeug nach Fig. 1 ist die spiralförmige Förderwendel eingängig mit der Steigungshöhe (h₁) ausgebildet, wodurch sich eine umlaufende wendelförmige Abfuhrnut 7 mit der Nutenhöhe h₂ ergibt, die beidseitig von einem ebenfalls wendelförmig verlaufenden Steg 8 begrenzt ist. Die Steghöhe h₃ bildet den äußeren Umfang oder die Rückenfläche 9 des Stegs 8. Die Rückenfläche 9 weist den Förderwendeldurchmesser d₁ auf. Der Nenndurchmesser des Bohrwerkzeugs wird gebildet durch den Durchmesser D der Hartmetall-Schneidplatte 3. Der Kerndurchmesser des Bohrerkerns 31 der Förderwendel ist mit d₂ bezeichnet.

Das durch die Bohrmehlnut oder Abfuhrnut 7 geförderte Bohrmehl oder Bohrklein stützt sich auf der in Förderrichtung 10 weisenden Tragfläche 11 ab, die einen etwa rechtwinkligen Verlauf zur Bohrerlängsachse 12 aufweist.

Gemäß der Darstellung nach Fig. 1 sowie der vergrößerten Darstellung in Fig. 2 befindet sich innerhalb der Abfuhrnut 7 ein sogenannter Nebensteg 13. Dieser Nebensteg 13 stellt grundsätzlich eine verkleinerte Ausführungsform des Hauptstegs 8 dar. Er kann jedoch auch geometrisch variieren. Die Abfuhrnut 7 mit der Höhe h₂ wird durch einen Nebensteg 13 in einen unteren Nutenabschnitt 14 mit der Höhe h₄ und einem oberen Nutenabschnitt 15 mit der Höhe h₅ aufgeteilt. Die Steghöhe des Nebenstegs 13 ist mit h₈ bezeichnet. Die äußere Rückenfläche des Nebenstegs 13 ist mit Bezugszeichen 22 bezeichnet. Der Außendurchmesser der äußeren Rückenfläche 22 ist mit d₃ angegeben.

Durch den zusätzlichen Nebensteg 13 zum Hauptsteg 8 entsteht eine zusätzliche Tragfläche 17, die ebenfalls etwa rechtwinklig zur Bohrerlängsachse 10 verläuft.

Der Außendurchmesser d₃ der Nebenstege ist in der Darstellung nach Fig. 1 und 2 nur geringfügig kleiner bemessen als der Außendurchmesser d₁ der Förderwendel 7. Hierdurch bildet die Abfuhrnut 7 eine Art Doppelnut mit den Nutabschnitten 14, 15 und der Haupttragfläche 11 sowie der Nebentragfläche 17 für das Bohrmehl. Der Nebensteg 13 verläuft demnach ebenfalls als spiralförmige Nebenförderwendel mit der Steigungshöhe h₇ innerhalb der Abfuhrnut 7.

Gemäß den Darstellungen nach Fig. 1 und 2 sind der untere Nutenabschnitt 14 und der obere Nutenabschnitt 15 mit ihrer Höhe h₄ und h₅ etwa in gleicher Größe ausgebildet. Gleiches gilt für die Darstellung nach Fig. 3. Hier sind gleiche Teile mit gleichen Bezugszeichen versehen. In Fig. 3 ist jedoch der Außendurchmesser d₃ des dortigen Nebenstegs 18 deutlich kleiner bemessen, so daß sich nur eine kleinere Tragfläche 17 für das zu transportierende Bohrmehl ergibt. Die Nutenaufteilung der Nutenabschnitte 14, 15 ist in Fig. 3, ebenso wie in Fig. 2, symmetrisch vorgenommen, d. h. h₄ ≈ h₅. Das Durchmesserverhältnis d₃ zu d₁ liegt bei den Darstellungen nach Fig. 2 und 3 im Bereich von etwa 0,7 bis 0,95, um eine ausreichende Nebentragfläche 17 zu bilden.

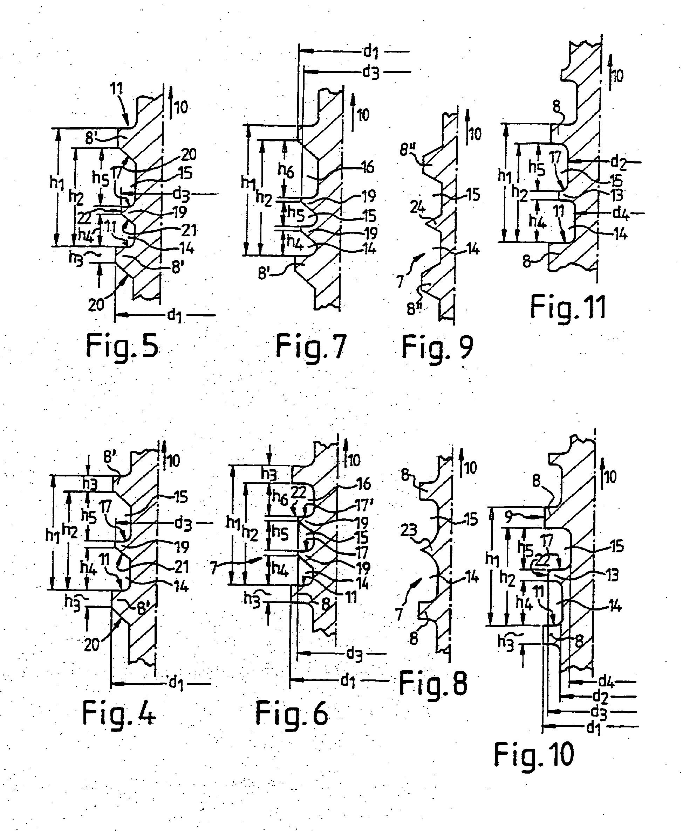

In den Fig. 4 bis 11 sind weitere Varianten des Grundprinzips nach den beschriebenen Fig. 2 und 3 angegeben. Gleiche Teile sind mit gleichen Bezugszeichen versehen.

Unterschiedlich zur Darstellung nach Fig. 2 sind in Fig. 4 und 5 sowohl der Hauptsteg 8' als auch der Nebensteg 19 in einer Art Sägezahnform ausgebildet, d. h. der der jeweiligen Tragfläche 11, 17 gegenüberliegende Bereich des jeweiligen Stegs ist als abgeschrägte Fläche 20 für den Hauptsteg 8' und als abgeschrägte Fläche 21 für den Nebensteg 19 ausgebildet.

In Fig. 4 sind die Abfuhrnutenabschnitte 14, 15 wiederum symmetrisch ausgebildet, d. h. h₄ ≈ h₅. In Fig. 5 liegt eine asymmetrische Anordnung für die Nutenaufteilung vor. Hier ist h₄ < h₅, d. h. der Abfuhrnutabschnitt 14 ist kleiner als der Abfuhrnutabschnitt 15. Die Durchmesser d₃ der äußeren Rückenflächen 22 der Nebenstege 19 können analog zur Darstellung nach den Fig. 2 und 3 ausgebildet sein. In der Darstellung nach Fig. 4 und 5 sind die Durchmesser d₃ gleich ausgebildet.

Eine weitere Variante des Grundprinzips ist in den Fig. 6 und 7 dargestellt. Hier ist die Abfuhrnut 7 in drei Teilabschnitte 14, 15, 16 aufgeteilt, mit den Höhen h₄, h₅ und h₆ der jeweiligen Abfuhrnut-Abschnitten. Der Hauptsteg 8 ist analog zur Darstellung nach Fig. 2 und 3 im wesentlichen rechtwinklig, die Nebenstege 19 analog zu den Darstellungen nach Fig. 4 und 5 nach Art einer Sägezahnform ausgebildet.

Die Darstellungen nach Fig. 7 unterscheidet sich von der nach Fig. 6 dadurch, daß wiederum eine asymmetrische Aufteilung der Nutenabschnitte 14, 15, 16 vorgenommen wird, wobei der untere 14 und der mittlere Nutenabschnitt 15 etwa eine gleiche Höhe h₄ ≈ h₅ aufweisen, während die Nutenhöhe h₆ des oberen Nutenabschnitts 16 etwa doppelt so groß ist wie die Höhen h₄, h₅.

Ähnlich wie in den Fig. 4 und 5 sind auch in Fig. 7 die Stege 8', 9 nach Art einer Sägezahnform ausgebildet.

In den Fig. 6 und 7 sind die Außendurchmesser d₃ der äußeren Rückenflächen 22 in einem Abmessungsbereich zum Förderwendeldurchmesser d₁, wie dies zu Fig. 2 und 3 beschrieben ist.

Die Darstellung nach Fig. 8 entspricht weitestgehend der Darstellung nach Fig. 2, jedoch mit dem Unterschied, daß die Stegform des Nebenstegs 23 bogenförmig und spitz zulaufend ausgebildet ist, bei ansonsten symmetrischer Anordnung innerhalb der Abfuhrnut 7. Der Hauptsteg 8 ist wiederum rechteckförmig ausgebildet, wie dies zu Fig. 2 und 3 beschrieben ist.

Die Darstellung nach Fig. 9 zeigt einen dreieckförmigen Nebensteg 24, der wiederum symmetrisch in der Abfuhrnut 7 angeordnet ist. Die Hauptstege 8'' sind im Querschnitt trapezförmig ausgebildet. Im übrigen liegt eine symmetrische Anordnung der Abfuhrnut-Abschnitte 14, 15 innerhalb der Abfuhrnut 7 vor.

Bei der Darstellung nach den Fig. 2 bis 9 sind die Kerndurchmesser aller Abfuhrnut-Abschnitte etwa gleich ausgebildet. Dieser Kerndurchmesser ist mit d₂ bezeichnet.

Demgegenüber zeigen die Darstellungen nach Fig. 10 und 11 Nutenabschnitte 14, 15 mit unterschiedlichem Kerndurchmesser.

In Fig. 10 ist der untere Nutenabschnitt 14 mit einem Kerndurchmesser d₂, der obere Nutenabschnitt 15 mit einem Kerndurchmesser d₄ ausgebildet, wobei d₄ < d₂ ist. Durch eine Verkleinerung des Kerndurchmessers im oberen Nutenabschnitt 15 kann das Nutenvolumen zur Aufnahme von Bohrmehl noch weitere vergrößert werden. Auch die Nebentragfläche 17 des Nebenstegs 13 vergrößert sich damit. Hierdurch kann der verkleinerte Außendurchmesser d₃ (d₃ < d₁) kompensiert werden.

Der umgekehrte Fall liegt in der Darstellung nach Fig. 11 vor. Hier ist der untere Nutenabschnitt 14 mit einem kleineren Kerndurchmesser d₄ ausgestattet, während der obere Nutenabschnitt 15 den normalen Kerndurchmesser d₂ aufweist.

Die Darstellungen nach den Fig. 2 bis 11 zeigen auf, daß sich eine Vielzahl von Variationsmöglichkeiten ergeben, um innerhalb einer Abfuhrnut 7 einer ein- oder mehrgängigen Förderwendel Nutenabschnitte herzustellen, indem ein Nebensteg 13, 18, 19 zum Hauptsteg 8, 8', 8'' gebildet wird. Die geometrische Ausbildung dieser Nebenstege kann in verschiedenen Variationen erfolgen. Auch die Symmetrie oder Asymmetrie der verschiedenen Nutenabschnitte innerhalb der Abfuhrnut 7 kann die Eigenschaften der Abfuhrnut beeinflussen. Schließlich können verschiedene Kerndurchmesser der Nutenabschnitte zu verschieden großen Nutenvolumen führen.

Eine nicht zur Erfindung gehörige Ausführungsform ist in den Fig. 12 und 13 näher erläutert, wobei das Grundprinzip in den vorher beschriebenen Fig. 1 bis 11 beibehalten ist. Anstelle eines oder mehrerer zusätzlichen Nebenstege zum Hauptsteg 8 gemäß Fig. 1 bis 11 werden hier sozusagen negative Stege durch Ausbuchtungen 25, 26 gebildet. Hierfür wird der Kernquerschnitt der Förderwendel durch eine entsprechende Ausbuchtung geschwächt, die dann zur entsprechenden Tragflächen 27, 28 führen.

Beim Ausführungsbeispiel nach Fig. 12 wird demzufolge eine nasenförmige Aussparung 29 in den Förderwendelkern eingebracht, was zu einer maximalen Verringerung des Kernquerschnitts auf den Durchmesser d₅ führt. Die so ausgeführte Abschrägung weist gegenüber der Bohrerlängsachse 12 einen Winkel α ≈ 15° auf.

Durch die so gebildete zusätzliche Tragfläche 27 wird die Abfuhrnut 7 in einen unteren Nutenabschnitt 14 mit der Höhe h₄ und einen oberen Nutenabschnitt 15 mit der Höhe h₅ geteilt, wobei h₄ ≤ h₅ ist.

Die in Fig. 12 dargestellte nasenförmige Aussparung 29 mit der Tragfläche 27 wird beim Ausführungsbeispiel nach Fig. 13 durch eine halbkreisförmige Aussparung 30 ersetzt, mit einer Höhe h₉. Die halbkreisförmige Aussparung 30 bildet wiederum eine zusätzliche Tragfläche 28 für Bohrmehl. Hierdurch wird die Abfuhrnut 7 auch beim Ausführungsbeispiel nach Fig. 13 in einen unteren Nutenabschnitt 14 und einen oberen Nutenabschnitt 15 aufgeteilt.

In allen Figuren ist mit Pfeil 10 die Transportrichtung des Bohrmehls innerhalb der Bohrmehlnuten angegeben, die in Richtung Einspannende 6 zeigt.

Die vorliegende Erfindung kann auch dadurch verwirklicht werden, daß anstelle von Abfuhrnut-Abschnitten innerhalb einer bestehenden Abfuhrnut mehrere spiralförmige Abfuhrnuten vorgesehen sind, die jedoch mit unterschiedlichen Außendurchmessern der jeweiligen, die Abfuhrnuten begrenzenden Stege versehen sind. Beispielsweise kann bei einer 2-spiraligen oder 4-spiraligen Förderwendel jeder zweite Steg in seinem Außendurchmesser kleiner ausgeführt werden, so daß hierdurch eine verminderte Wandreibung durch die verkleinerten Außendurchmesser entsteht. Diese Variation des Außendurchmessers der Stege kann in symmetrischer oder asymmetrischer Reihenfolge über die Länge der Förderwendel stattfinden. Sie kann auch beliebig an einem Steg selbst durchgeführt werden, d. h. ein Steg kann z. B. über einen Drehwinkel von n x 360° (mit n = 1, 2, 3) abwechselnd einen größeren oder einen kleineren Außendurchmesser aufweisen. Hierdurch wird die Wandreibung stets vermindert, bei nahezu gleichbleibenden Fördereigenschaften der Förderwendel.

Die Erfindung ist nicht auf die dargestellten und beschriebenen Ausführungsbeispiele beschränkt. Sie umfaßt auch vielmehr alle weiteren fachmännischen Abwandlungen im Rahmen der Schutzrechtsansprüche.
- 1: Gesteinsbohrwerkzeug
- 2: Bohrerkopf
- 3: Hartmetall-Schneidplatte
- 4: Wendelschaft
- 5: spiralförmige Förderwendel
- 6: Einspannschaft
- 7: Abfuhrnut
- 8: Steg (Haupt-)
- 9: äußerer Umfang (Rückenfläche)
- 10: Förderrichtung
- 11: Tragfläche (Haupt-)
- 12: Bohrerlängsachse
- 13: Nebensteg
- 14: unterer Nutenabschnitt
- 15: oberer Nutenabschnitt
- 16: Nutenabschnitt
- 17: Tragfläche (Neben-)
- 18: Nebensteg
- 19: Nebensteg
- 20: abgeschrägte Fläche
- 21: abgeschräfte Fläche
- 22: äußere Rückenfläche
- 23: Nebensteg
- 24: Nebensteg
- 25: Ausbuchtung
- 26: Ausbuchtung
- 27: Tragfläche
- 28: Tragfläche
- 29: nasenförmige Aussparung
- 30: halbkreisförmige Aussparung
- 31: Bohrerkern

- h₁: Steigungshöhe der Hauptförderwendel
- h₂: Nutenhöhe
- h₃: Steghöhe von 8
- h₄: unterer Nutenabschnitt
- h₅: oberer mittlerer Nutenabschnitt
- h₆: oberer Nutenabschnitt
- h₇: Steigungshöhe der Nebenförderwendel
- h₈: Steghöhe von 13
- h₉: Höhe der Ausbuchtung 30
- d₁: Förderwendeldurchmesser
- D: Nenndurchmesser
- d₂: Kerndurchmesser
- d₃: Außendurchmesser der Nebenförderwendel
- d₄: Kerndurchmesser
- d₅: Kerndurchmesser
- t₁: Nutentiefe (d₁-d₂)
- t₂: Nutentiefe (d₃-d₂)

## Patentansprüche

1. Bohrwerkzeug, insbesondere Gesteinsbohrer für drehende und/oder schlagende Beanspruchung, mit einem Bohrerkopf (2), einer sich hieran anschließenden, ein- oder mehrgängigen, spiralförmigen Förderwendel (5) mit wenigstens einer Abfuhrnut (7) für Bohrmehl und einem Einspannschaft (6), wobei die Abfuhrnut (7) der Förderwendel (5) von spiralförmig verlaufenden Hauptstegen (8) mit gleichem Außendurchmesser (d₁) begrenzt ist, wobei zwischen den Hauptstegen (8) Nebenstege (24) liegen, **dadurch gekennzeichnet, dass** innerhalb der Abfuhrnut (7) wenigstens ein spiralförmig umlaufender Nebensteg (13, 18, 19, 23, 24) als Nebenförderwendel (18, 19) zur Bildung von wenigstens zwei Abfuhrnut-Abschnitten (14, 15, 16) vorgesehen ist, und dass der äußere Durchmesser (d₃) der Nebenstege (13, 18, 19, 23, 24) gegenüber dem Durchmesser (d₁) der Hauptstege (8, 8') zurückversetzt ist, wobei der Außendurchmesser (d₃) der Nebenstege (13, 18, 19, 23, 24) etwa 70 bis 95 % des Außendurchmessers (d₁) der Hauptstege (8, 8') beträgt.

2. Bohrwerkzeug nach Anspruch 1, **dadurch gekennzeichnet, daß** eine zwei- oder vierspiralige Förderwendel (5) vorgesehen ist, wobei die die Abfuhrnut (7) begrenzenden Hauptstege (8) und Nebenstege (13, 18, 19, 23, 24) jeweils abwechselnd unterschiedliche Außendurchmesser (d₁, d₂) und/oder unterschiedliche Rückenstegbreiten (h₃, h₈) aufweisen.

3. Bohrwerkzeug nach Anspruch 1 oder 2, **dadurch gekennzeichnet, daß** eine oder mehrere Abfuhrnuten (7) der Förderwendel (5) in zwei oder mehr Abfuhrnut-Abschnitte (14, 15) unterteilt ist, wobei jeder Abschnitt eine Bohrmehl-Tragfläche (27, 28) aufweist.

4. Bohrwerkzeug nach einem der Ansprüche 1 bis 3, **dadurch gekennzeichnet, daß** die Abfuhrnut (7) von zwei Hauptstegen (8) begrenzt ist und sich zwischen den Hauptstegen (8) wenigstens eine zusätzliche Bohrmehl-Tragfläche (17) in Form wenigstens eines Nebenstegs (13, 18, 19, 23, 24) befindet.

5. Bohrwerkzeug nach einem der Ansprüche 1 bis 4, **dadurch gekennzeichnet, daß** zur Bildung von Bohrmehltragflächen die Tragflächen (11, 27, 28) der Hauptstege (8, 8') und/oder der Nebenförderwendel einen etwa rechtwinkligen Verlauf zur Bohrerlängsachse (12) aufweisen.

6. Bohrwerkzeug nach einem der Ansprüche 1 bis 5, **dadurch gekennzeichnet, daß** die Tragflächen (11, 27, 28) der Hauptstege (8, 8') und/oder der Nebenförderwendel einen ebenen, bauchigen oder taschenförmigen Verlauf aufweisen.

7. Bohrwerkzeug nach einem der Ansprüche 1 bis 6, **dadurch gekennzeichnet, daß** die Rückenbreite (h₈) der Nebenstege (13, 18, 19, 23, 24) kleinere ist als die Rückenbreite (h₃) der Hauptstege (8, 8').

8. Bohrwerkzeug nach einem der vorgenannten Ansprüche, **dadurch gekennzeichnet, daß** die Querschnitte (11) der Hauptstege (8, 8') rechteckförmig, trapezförmig, halbtrapezförmig, dreieckförmig, halbkreisförmig und/oder spitz, flach oder rund zulaufend ausgebildet sind.

9. Bohrwerkzeug nach einem der vorgenannten Ansprüche, **dadurch gekennzeichnet, daß** die Nutentiefen (t₁, t₂) der Abfuhrnut-Abschnitte (14, 15, 16) gleich groß oder unterschiedlich ausgebildet sind, wobei wahlweise ein in Förderrichtung liegender Abfuhrnut-Abschnitt oder ein zur Bohrerspitze hinweisender Abfuhrnut-Abschnitt eine größere Nutentiefe (t₁, t₂) aufweist.

10. Bohrwerkzeug nach einem der vorhergehenden Ansprüchen, **dadurch gekennzeichnet, daß** ein oder mehrere Stege einer ein-oder mehrspiralige Förderwendel im Bereich des spiralförmigen Umlaufs unterschiedliche Außendurchmesser und/oder unterschiedliche Rückenstegbreiten (h₃, h₈) aufweisen.

## Claims

1. Drilling tool, in particular a masonry drill for rotary and/or percussive loading, comprising a drill head (2), an adjoining, single- or multi-start conveying helix (5) having at least one disposal flute (7) for drillings, and a clamping shank (6), the disposal flute (7) of the conveying helix (5) being defined by helically running main webs (8) having the same outside diameter (d₁), secondary webs (24) lying between the main webs (8), **characterized in that** at least one helically encircling secondary web (13, 18, 19, 23, 24) is provided as secondary conveying helix (18, 19) inside the disposal flute (7) for forming at least two disposal flute sections (14, 15, 16), and **in that** the outside diameter (d₃) of the secondary webs (13, 18, 19, 23, 24) is set back relative to the diameter (d₁) of the main webs (8, 8'), the outside diameter (d₃) of the secondary webs (13, 18, 19, 23, 24) being approximately 70 to 95% of the outside diameter (d₁) of the main webs (8, 8').

2. Drilling tool according to Claim 1, **characterized in that** a twin or quadruple conveying helix (5) is provided, the main webs (8), which define the disposal flute (7), and the secondary webs (13, 18, 19, 23, 24) in each case alternately having different outside diameters (d₁, d₃) and/or different land widths (h₃, h₈).

3. Drilling tool according to Claim 1 or 2,
**characterized in that** one or more disposal flutes (7) of the conveying helix (5) are divided into two or more disposal flute sections (14, 15), each section having a drillings bearing surface (27, 28).

4. Drilling tool according to one of Claims 1 to 3, **characterized in that** the disposal flute (7) is defined by two main webs (8), and at least one additional drillings bearing surface (17) in the form of at least one secondary web (13, 18, 19, 23, 24) is located between the main webs (8).

5. Drilling tool according to one of Claims 1 to 4, **characterized in that**, to form drillings bearing surfaces, the bearing surfaces (11, 27, 28) of the main webs (8, 8') and/or of the secondary conveying helix run approximately at right angles to the drill longitudinal axis (12).

6. Drilling tool according to one of Claims 1 to 5, **characterized in that** the bearing surfaces (11, 27, 28) of the main webs (8, 8') and/or of the secondary conveying helix run in a flat, bulged or pocket-shaped manner.

7. Drilling tool according to one of Claims 1 to 6, **characterized in that** the land width (h₈) of the secondary webs (13, 18, 19, 23, 24) is smaller than the land width (h₃) of the main webs (8, 8').

8. Drilling tool according to one of the aforesaid claims, **characterized in that** the cross sections (11) of the main webs (8, 8') are designed to be rectangular, trapezoidal, semi-trapezoidal, triangular, semicircular and/or so as to taper to a point or to a flat or round end.

9. Drilling tool according to one of the aforesaid claims, **characterized in that** the flute depths (t₁, t₂) of the disposal flute sections (14, 15, 16) are designed to be the same size or different, wherein a disposal flute section lying in the conveying direction or a disposal flute section pointing towards the drill point optionally has a larger flute depth (t₁, t₂).

10. Drilling tool according to one of the preceding claims, **characterized in that** one or more webs of a single or multiple conveying helix have different outside diameters and/or different land widths (h₃, h₈) in the region of the helical encircling portion.

## Revendications

1. Foret, notamment foret à matériau, pour travailler par rotation et/ou percussion, comportant une tête de foret (2) se poursuivant par une spire de transfert (5), hélicoïdale, à un ou plusieurs filets, ayant au moins une rainure d'évacuation (7) pour la farine de perçage et une queue de serrage (6),
la rainure d'évacuation (7) de la spirale de transfert (5) étant délimitée par des filets principaux (8) en hélice, de même diamètre extérieur (d₁) et des filets auxiliaires (24), entre les filets principaux (8)
**caractérisé en ce que**
dans la rainure d'évacuation (7) il y a au moins un filet auxiliaire (13, 18, 19, 23, 24) en hélice, comme spire de transfert auxiliaire (18, 19) pour former au moins deux segments de rainures d'évacuation (14, 15, 16) et
le diamètre extérieur (d₃) des filets auxiliaires (13, 18, 19, 23, 24) est en retrait par rapport au diamètre (d₁) du filet principal (8, 8'),
le diamètre extérieur (d₃) des filets auxiliaires (13, 18, 19, 23, 24) représentant entre 70 et 95 % du diamètre extérieur (d₁) du filet principal (8, 8').

2. Foret selon la revendication 1,
**caractérisé en ce qu'**
il comporte une spire de transfert (5) à deux ou quatre hélices et
le filet principal (8) qui délimite la rainure d'évacuation (7) et les filets auxiliaires (13, 18, 19, 23, 24) ont des diamètres extérieurs (d₁, d₂) différents, alternant et/ou des dos de largeur (h₃, h₈), différente.

3. Foret selon la revendication 1 ou 2,
**caractérisé en ce qu'**
une ou plusieurs rainures d'évacuation (7) de la spire de transfert (5) sont subdivisées en deux ou plusieurs segments de rainures d'évacuation (14, 15) et chaque segment a une surface de support de farine de perçage (27, 28).

4. Foret selon l'une des revendications 1 à 3,
**caractérisé en ce que**
la rainure d'évacuation (7) est délimitée par deux filets principaux (8) et entre lesquels il y a au moins une surface de support de farine de perçage (17), supplémentaire, sous la forme d'au moins un filet auxiliaire (13, 18, 19, 23, 24).

5. Foret selon l'une des revendications 1 à 4,
**caractérisé en ce que**
pour former les surfaces de supports de farine de perçage, les surfaces de support (11, 27, 28) des filets principaux (8, 8') et/ou des filets de transfert auxiliaires ont un tracé sensiblement perpendiculaire à l'axe longitudinal (12) du foret.

6. Foret selon l'une des revendications 1 à 5,
**caractérisé en ce que**
les surfaces de supports (11, 27, 28) des filets principaux (8, 8') et/ou des filets de transfert auxiliaires ont une forme plane, bombée ou en forme de cuvette.

7. Foret selon l'une des revendications 1 à 6,
**caractérisé en ce que**
la largeur (h₈) du dos du filet auxiliaire (13, 18, 19, 23, 24) est inférieure à la largeur (h₃) du dos du filet principal (8, 8').

8. Foret selon l'une des revendications précédentes,
**caractérisé en ce que**
la section (11) du filet principal (8, 8') est de forme rectangulaire, trapézoïdale, semi-trapézoïdale, triangulaire, semi-circulaire et/ou pointue, plate ou ronde, en se rejoignant.

9. Foret selon l'une des revendications précédentes,
**caractérisé en ce que**
les profondeurs de rainures (t1, t2) des segments de rainures d'évacuation (14, 15, 16) sont égales ou différentes et, au choix, un segment de rainure d'évacuation situé dans la direction de transfert ou un segment de rainure d'évacuation tourné vers la pointe du foret ont une profondeur de rainure (t₁, t₂) plus grande.

10. Foret selon l'une des revendications précédentes,
**caractérisé en ce qu'**
une ou plusieurs entretoises d'une spire de transfert a une ou plusieurs hélices, de diamètres extérieurs différents dans la région du tracé en hélices et/ou des largeurs de dos (h₃, h₈) différentes.
